Europäisches Patentamt

European Patent Office

Office européen des brevets

(11) Publication number: **0 246 637**
**A2**

## (12) EUROPEAN PATENT APPLICATION

(21) Application number: 87107353.2

(51) Int. Cl.⁴: **G01H 11/06**

(22) Date of filing: 20.05.87

(30) Priority: 21.05.86 US 865557

(43) Date of publication of application:
**25.11.87 Bulletin 87/48**

(84) Designated Contracting States:
**AT BE CH DE ES FR GB IT LI LU NL SE**

(71) Applicant: **UNION CARBIDE CORPORATION**
**39 Old Ridgebury Road**
**Danbury Connecticut 06817(US)**

(72) Inventor: **Bradbury, Eugene Richard**
**90 Wellingwood Drive**
**East Amerst (14051) N.Y.(US)**
Inventor: **Braun, Frederick William**
**4485 Lower River Road**
**Lewiston (14092) N.Y.(US)**

(74) Representative: **Schwan, Gerhard, Dipl.-Ing.**
**Elfenstrasse 32**
**D-8000 München 83(DE)**

(54) Method for monitoring vibrations in rotating machinery.

(57) A method for monitoring vibrations in rotating machinery comprising acquiring vibration signals from a rotating part while it operates respectively within and below its normal intended operating speed range, digitizing the signals, transforming the signals into the frequency domain, normalizing the signal with respect to part rpm and subtracting the runout data from the normal operating data to easily achieve a comprehensive reading of the rotating part condition.

FIG. 1

## METHOD FOR MONITORING VIBRATIONS IN ROTATING MACHINERY

### Technical Field

This invention relates generally to the monitoring of rotating machinery and more particularly to the analyzing of rotating machinery vibration data.

### Background of the Invention

Rotating machinery, such as a shaft in an axial or centrifrugal compressor, turbine or motor, is generally monitored, either continuously or intermittently to ensure safe operation of the machine and to determine if and when maintenance is necessary. One common method of monitoring such machinery is to monitor the vibrations of the rotating part as the part rotates through its periodic movement. The distribution of frequenices present in the vibration signal and the magnitude of such vibrations give an indication that machine operating problems may arise.

Because of rotating part imperfections such as surface irregularities, scratches, residual magnetism and residual stress concentration, a certain level of noise that appears to be vibration is always present. In order to get a true picture of the vibration levels of the rotating part this background noise or runout must be taken into account.

One commonly used technique for monitoring rotating part vibration is the vector nulling method. This technique employs a tracking filter to determine the amplitude and phase of the rotating components during normal running speed and during a slower speed wherein only runout vibration is present. The runout vector is then subtracted from the operating vector to provide operating vibration data. This technique is relatively easy to use but is disadvantageous because it compensates runout only at the rotating speed.

Another method for monitoring rotating part vibration is the time domain compensation technique which comprises acquiring and digitizing a data sample of runout and then subtracting this sample from data samples obtained during operation of the machinery. This technique is effective but is complicated and difficult to implement and carry out.

It is therefore an object of this invention to provide a method of monitoring the vibrations of a rotating part which provides an additional amount of information about the part and is also relatively easy to carry out.

### Summary of the Invention

The above and other objects of this invention which will become apparent to one skilled in the art are attained by this invention which is:

A method for monitoring the vibrations of a rotating part comprising:

(A) acquiring a first vibration data signal from a vibrating rotating part while the part is rotating at less than its normal operating speed range, and a second vibration data signal from said vibrating rotating part while the part is rotating within the normal operating speed range;

(B) digitizing said data signals into a first and second series of discrete points;

(C) transforming each digitized data series into the frequency domain;

(D) measuring the rpm of the rotating part while the first and second data signals are being acquired;

(E) normalizing the first and second frequency domain data by the respective part rpm so that the frequency data is in terms of a multiple of running speed; and

(F) subtracting the first normalized frequency domain data from the second normalized frequency domain data to produce vibrating data free from runout.

As used herein the term "rotating" means the periodic movement of a part. Movement of the part from a starting point and back to the starting point constitutes one rotation or revolution. Generally, but not necessarily, the part will rotate in a circular manner.

As used herein the term "rpm" means rotation or revolutions of the part over a defined time period. One example of this would be revolutions per minute.

## Brief Description of the Drawings

Figure 1 is schematic representation of one embodiment of a hardware set-up which can be used to carry out the method of this invention.

Figure 2 is a graphical representation of a typical vibration data signal acquired from a vibrating rotating part.

Figure 3 is the data signal of Figure 2 digitized into 16 discrete points represented in tabular form.

Figure 4 is the digitized data of Figure 3 transformed into the frequency domain and presented in a simplified graphical form.

Figure 5 is a graphical representation of runout data in the frequency domain.

Figure 6 is a graphical representation of the subtraction of the data of Figure 5 from that of Figure 4.

Figure 7 is a graphical representation of the Figure 6 data inversely transformed into the time domain.

## Detailed Description

The method of this invention will be described in detail with reference to a particular embodiment wherein the rotating part is a shaft which rotates in a circular motion.

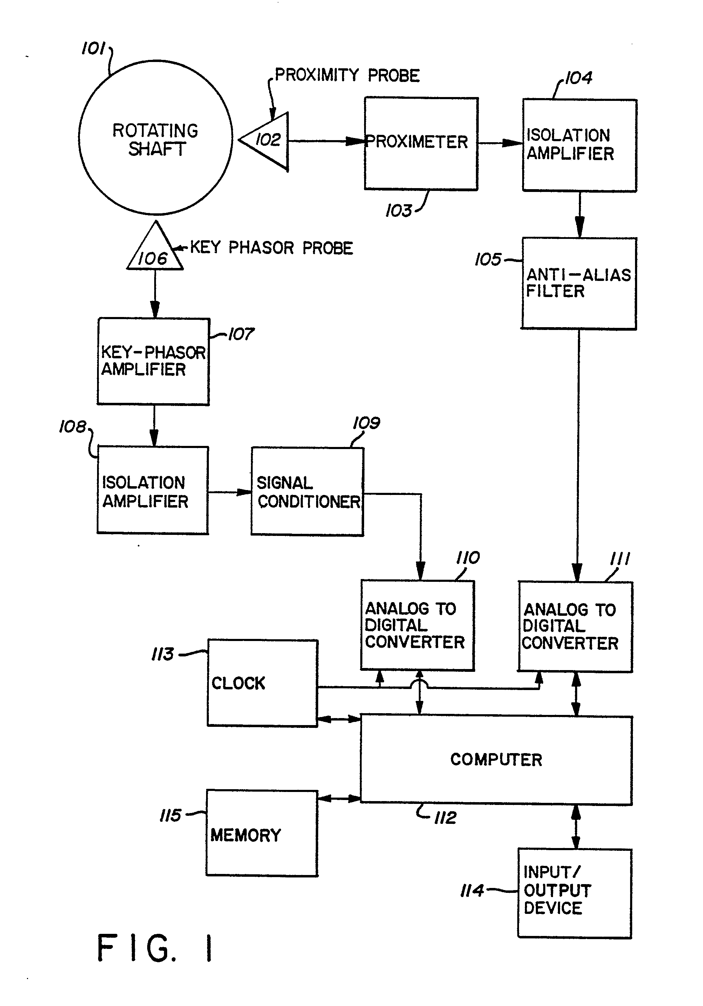

Figure 1 is a schematic representation of one preferred hardware arrangement for carrying out the method of this invention.

Referring now to Figure 1, rotating shaft 101 is shown in radial cross-section. The shaft may be rotating at any rotational speed and either in the clockwise or counterclockwise direction. The vibrations of the rotating shaft 101 are monitored by proximity probe 102. The data signal from the proximity probe is passed into proximeter 103 which supplies voltage to proximity probe 102 and conditions the probe output. This method of monitoring shaft vibrations with a proximity probe is well known to those skilled in the art and is discussed in greater detail in Machinery Analysis and Monitoring, J.S. Mitchell, Pennwell Books, 1981, page 26, and in Proximity Measurement For Engine System Protection and Malfunction Diagnosis, D.E. Bently, Diesel and Gas Turbine Progress, March, 1972.

The conditioned signal from proximeter 103 is passed through isolation amplifier 104 and low band pass filter 105 and into analog to digital converter 111 which digitizes the data signal into a series of discrete points.

The digitized data is transformed into the frequency domain. Preferably this transformation is carried out through a fast Fourier transform. Fast Fourier transforms are well known in the art. They are discussed by J.W. Cooley and J.W. Tukey in the article, "Analgorithm for the Machine Calculation of Complex Fourier Series", published in Volume 19 of Mathematics of Computation , April 1965. Many good reference texts exist including Applied Series Analysis by Otnes and Enochson (published by John Wiley & Sons, 1978) and Theory and Applications of Digital Signal Processing by Rabiner and Gold (Prentice-Hall, 1975). In the embodiment of Figure 1, the transformation is carried out in computer 112 by means of a program stored in computer memory 115. For real time applications a Digital Signal Processing (DSP) chip can be used to perform the transformation into the frequency domain. Current technology DSP chips perform the same manipulations on the data several orders of magnitude faster than computer programs.

Simultaneously with the acquisition of the vibration data signal, the rpm of the rotating part is determined. In Figure 1, the rpm of shaft 101 is determined by key phasor probe 106. The operation of a key phasor probe is well known to those skilled in the art and is discussed in greater detail in THE KEYPHASOR - A Necessity For Machinery Diagnosis, Bentley Nevada, November, 1977. The signal from key phasor probe 106 is passed sequentially through key phasor amplifier 107, isolation amplifier 108, signal conditioner 109 and analog to digital converter 110.

The frequency spectrum, obtained from the proximity probe, is corrected and normalized in terms of the rpm collected through the key phasor subsystem and the resulting data set is stored in memory 115.

This sequence of steps is carried out when the rotating part is operating at slower than its normal speed range such as during coastdown, when the rotating part is uncoupled from the power source and is coasting down to a stop, in order to acquire the background or runout data for the rotating part. As is known, all rotating parts have a normal rotating speed range within which they are designed to operate efficiently.

This sequence of steps is also carried out when the rotating part is operating within its normal speed range in order to acquire full operating data for the rotating part. The runout data is subtracted from the operating data and the corrected true vibration signal is then stored in memory 115 and displayed on Input/Output Device, i.e. monitor, 114.

A closer look at the sequence of events in data acquisition shows that the computer sends an instruction to the clock device 113 to begin outputting a trigger pulse at a specified time interval. Each trigger signal will initiate an analog to digital conversion at converter 111 which begins collecting data after the key phasor mark has passed under monitor 106. To capture the required relationship information, it is necessary to initiate the process of data collection at the same relative shaft location for each data sample. This is accomplished by monitoring the key phasor signal 106 at converter 110. Converter 111 proceeds to digitize the data sample and the data is subsequently read by the computer 112. The trigger/data read process is repeated until a complete set of data sample points is acquired. The complete data set is then transformed to the frequency domain by the computer 112. The frequency domain data is subsequently normalized by the shaft rotational speed provided by the key phasor system through converter 110.

The hardware to carry out the embodiment of this invention discussed in detail with reference to Figure 1 is commercially available. These pieces of hardware are listed below along with at least one source of such equipment. The numerals refer to those of Figure 1.

| Device | Name | Description | Source |
|---|---|---|---|
| 102 | Proximity Probe | Senses probe-to-shaft distance | Bently-Nevada Minder, Nevada |
| 103 | Proximeter | Oscillator/demodulator for prox probe signal | Bently-Nevada Minder, Nevada |
| 104, 108 | Isolation Amp | Provides isolation between computer and sensors; eliminates ground loops | Analog Devices Norwood, MA or Acromag Wixon, MI |
| 105 | Anti-alias Filter | Low pass filter with corner frequency 1/2 digitizing rate of analog-to-digital converter | Wavetek (Rockland) Sceintific, San Diego, CA or Krohn-Hite Avon, MA |
| 106 | Key Phasor Probe | Senses 1 event per revolution of shaft, can be implemented with a proximity probe monitoring a shaft surface with a notch once per revolution | Bently-Nevada Minder, Nevada |
| 107 | Key Phasor Amplifier | Probe 106 determines the type of device required. For a prox probe implementation, a proximeter is required. | Bently-Nevada Minder, Nevada |
| 109 | Signal Conditioner | Instrumentation amplifier to provide signal conditioning to the computer input signal (sensor output); i.e. correct voltage range and offset, filter noise, etc. | Analog Devices Norwood, MA or Acromag Wixom, MI |

Items 110, 111, 112, 113, and 115 can be implemented as computer cards within the bus structure of a digital computer. Several acceptable bus structures can accomodate the invention, including STD-BUS supported by about 150 manufacturers including Pro-Log, Monterey, CA and Mostek, Carrollton, TX; IBM-Pc by IBM and other mfgs.; and Multibus supported by such 70 manufacturers as Intel, Hillsboro, OR and Intensil, Sunnyvale, CA. Item 114 can be any terminal or printing type device, or a serial data transmission link such as a modem. These devices are common off-the-shelf units manufactured by a variety of vendors and the particular selection is subject to the particular application of the invention.

Data acquisition during coastdown is the preferred method of determining runout present in a rotating system. The theory behind this procedure is that without input excitation and at speeds well below the normal operating speeds, the only signals present will be those due to rotating part imperfections as all other vibrations will have essentially disappeared. By vectorially subtracting normalized coastdown data from the normalized frequency data, the resulting frequency domain data is free of the effects of runout. If desired, a frequency to time domain algorithm (inverse Fourier transform) can then be used to calculate the operating vibration data trace free from the effects of runout.

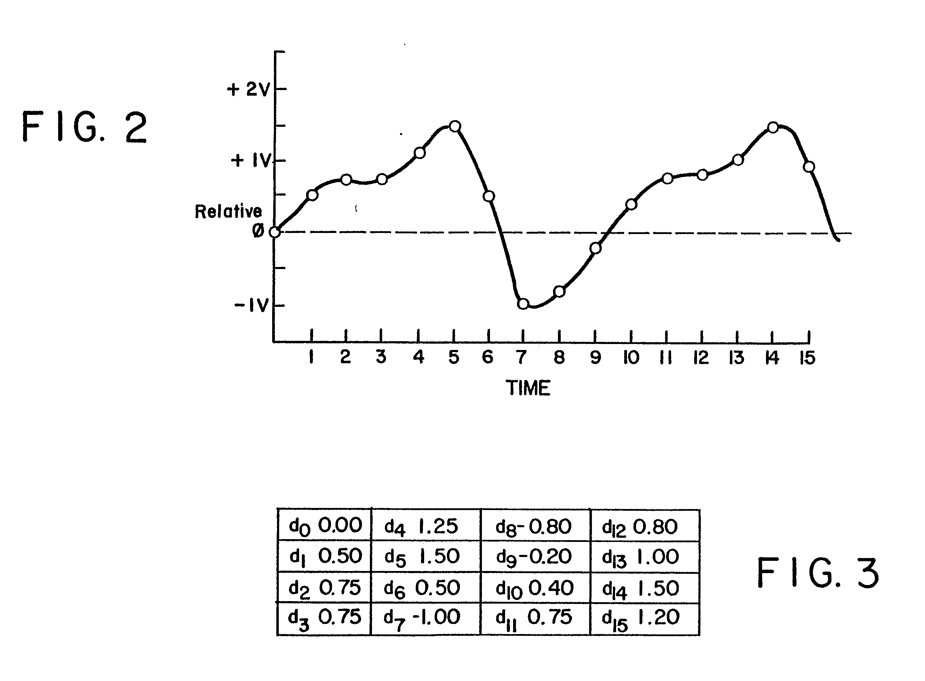

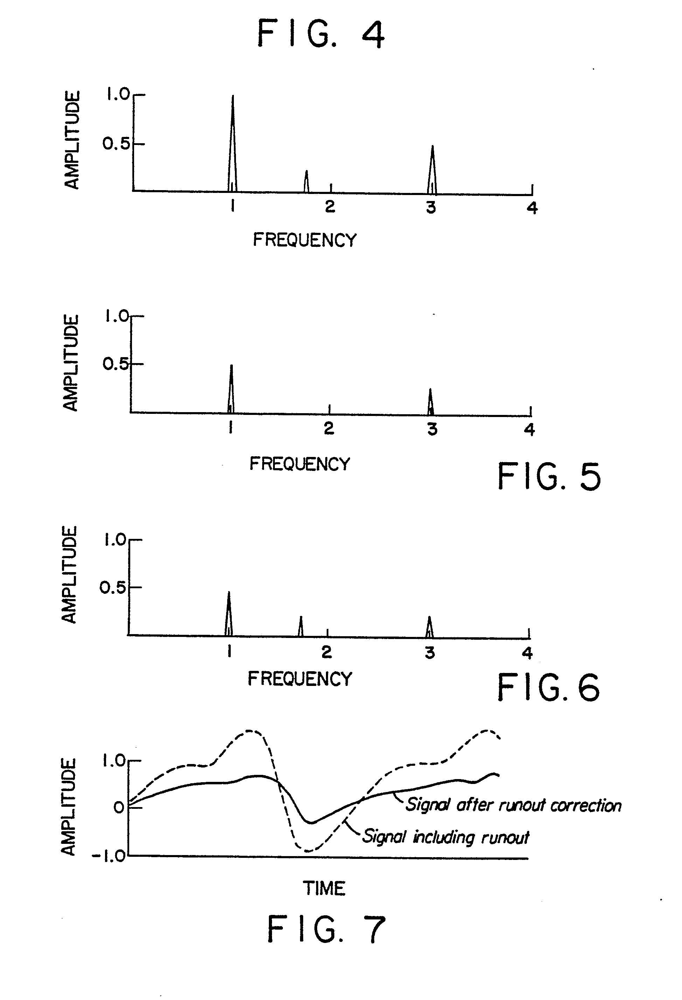

An example of the method of this invention is demonstrated graphically in Figures 2-7. Figure 2 shows a vibration signal, acquired while the part is operating within its normal speed range, varying between +1.5 and -1 volts with a regular periodic behavior. Figure 2 shows how 16 data points can be sampled at equally spaced time intervals. The data points acquired by converter 111 can easily be digitized to be in terms of voltage monitored at each respective data point as shown in Figure 3. After performing some software data signal conditioning the input signal can be transformed to the frequency domain using a fast Fourier or equivalent process. Output of the frequency domain data would appear as a plot of amplitude versus frequency depicting those frequencies and respective magnitudes that were present in the original data sample. The data shown in Figure 4 is the original data transformed to the frequency domain and normalized by rpm. The process exhibited in Figures 2-4 is also carried out during coastdown and the results are shown in Figure 5.

Figure 6 is the resultant data obtained by subtracting plot 5 from plot 4.

Figure 7 presents the resulting operating data trace free of the influence of runout. If both X and Y vibration monitors are present, runout free orbits can easily be calculated by using the above technique. Figure 7 is obtained by performing an inverse transform on the data shown in Figures 4 and 6. In Figure 7 the dotted line is time domain data of Figure 4 including the runout data, and the solid line is the data of Figure 6 corrected for the runout data.

This is a simplified representation of the subtraction process actually required since both Figures 4 and 5 have phase angle relationships to be taken into account in addition to amplitude.

To assess the advantages of the method of this invention, it is instructive to compare it to current methods of correcting for runout. The two common methods that are being utilized today are the vector nulling method and the time domain digital compensation technique.

The vector nulling procedure comprises acquiring a data sample during coastdown. Using a tracking filter, the rotating speed amplitude and phase components are determined. These components are memorized and later subtracted from operating data electronically. In most common implementations of this technique, the compensation is limited to correction of the running speed component only, and therefore any of the other frequency data present in the runout is ignored. Therefore, with this method one can tell if there is a problem with the rotating part, but one has only limited information about the nature of such problem.

The second common method of runout correction is digital time domain runout correction. This procedure comprises acquiring a data set during coastdown and digitizing it into a series of discrete points per shaft revolution. The data set obtained is stored in memory and later subtracted from data sets acquired during operation. Using this time domain method with data such as in Figure 2, it would be necessary to correct each individual data point by subtracing the correct amount of runout as measured during coastdown. This is extremely time consuming and cumbersome.

The three major differences between the conventional time domain method and the frequency domain method of this invention are (1) intended end product, (2) number of data manipulations, and (3) signal to noise quality. The frequency domain method of this invention is particularly advantageous in situations where it is desired that the data be viewed in spectral format, such as condition monitoring of rotating machinery.

In such systems where spectral data is desired, the frequency domain method of this invention requires considerably fewer data manipulations. Time domain techniques require that the runout correction be performed on each data sample prior to continuation of the data manipulation process. Consequently, a typical data assemblage with 64 averages would require 64 runout subtraction processes for each of the

5

data points (512 typical). In contrast, a typical vibration spectrum is usually comprised of a few discrete frequencies containing a contribution with the remaining frequencies void of any significant energy. A sample vibration spectrum was presented as Figure 6. There are three significant frequencies present. Using the frequency domain method of this invention requires that only three runout subtractions be performed. If an averaging technique is employed, the runout subtraction is performed subsequent to the averaging process and still only three subtractions are required.

A third advantage to the frequency domain method of this invention involves averaging the runout data to achieve a better signal to noise ratio. Since the time domain method subtracts the runout waveform from each sample, any error present in the runout will be present in the corrected data and cannot be averaged out. By averaging the runout data in the frequency domain, a better quality signal can be obtained. The savings of computational time and ease of computation using the new technique of this invention enables the creation of a superior machine protection procedure and permits better vibration analysis to be performed than using previously available techniques.

## Claims

1. A method for monitoring the vibrations of a rotating part comprising:

(A) acquiring a first vibration data signal from a vibrating rotating part while the part is rotating at less than its normal operating speed range, and a second vibration data signal from said vibrating rotating part while the part is rotating within its normal operating speed range;

(B) digitizing said data signals into a first and second series of discrete points;

(C) transforming each digitized data series into the frequency domain;

(D) measuring the rpm of the rotating part while the first and second data signals are being acquired;

(E) normalizing the first and second frequency domain data by the respective part rpm so that the frequency data is in terms of a multiple of running speed; and

(F) subtracting the first normalized frequency domain data from the second normalized frequency domain data to produce vibrating data free from runout.

2. The method of claim 1 wherein step (A) is carried out by monitoring the part with a proximity probe to produce a signal, feeding the signal into a proximeter to condition the signal, feeding the conditioned signal into an isolation amplifier, and passing the output from the isolation amplifier through a low band pass filter.

3. The method of claim 1 wherein step (B) is carried out by passing each vibration data signal through an analog to digital converter.

4. The method of claim 1 wherein step (C) is carried out by processing each digitized data series through a fast Fourier transform.

5. The method of claim 1 wherein step (D) is carried out by monitoring part revolutions with a key phasor probe to produce a signal, and feeding the signal consecutively through a key phasor amplifier, and isolation amplifier, a signal conditioner, and an analog to digital converter.

6. The method of claim 1 wherein the first vibration data signal is acquired while the part is being run in a coastdown mode.

7. The method of claim 1 further comprising processing the frequency domain data through an inverse Fourier transform to obtain the data in the time domain.

8. The method of claim 1 further comprising displaying the resulting data in spectral format.

9. The method of claim 1 wherein the rotating part is rotating vibrating shaft.

10. The method of claim 9 wherein the rotating vibrating shaft is in a turbine.

11. The method of claim 9 wherein the rotating vibrating shaft is in a compressor.

12. The method of claim 9 wherein the rotating vibrating shaft is in a motor.

F I G. 1

FIG. 2

FIG. 3

| $d_0$ 0.00 | $d_4$ 1.25 | $d_8$ -0.80 | $d_{12}$ 0.80 |
|---|---|---|---|
| $d_1$ 0.50 | $d_5$ 1.50 | $d_9$ -0.20 | $d_{13}$ 1.00 |
| $d_2$ 0.75 | $d_6$ 0.50 | $d_{10}$ 0.40 | $d_{14}$ 1.50 |
| $d_3$ 0.75 | $d_7$ -1.00 | $d_{11}$ 0.75 | $d_{15}$ 1.20 |

# FIG. 4

# FIG. 5

# FIG. 6

*Signal after runout correction*

*Signal including runout*

# FIG. 7